# EUROPEAN PATENT SPECIFICATION

(11) **EP 3 995 295 B1**
(45) Date of publication and mention of the grant of the patent: **05.03.2025**
(21) Application number: 21205592.5
(22) Date of filing: 29.10.2021
(51) Int. Cl.: B29C 65/36, B65B 51/22, H05B 6/10, H05B 6/14, H05B 6/40, H05B 6/44, B29C 65/74, B29K 705/02

(54) **AN INDUCTION SEALING DEVICE**
INDUKTIONSVERSIEGELUNGSVORRICHTUNG
DISPOSITIF DE SCELLAGE PAR INDUCTION

(30) Priority: 06.11.2020 EP 20206207
(43) Date of publication of application: 11.05.2022
(73) Proprietor: Tetra Laval Holdings & Finance S.A., 1009 Pully (CH)
(72) Inventor: ANDERSSON, Håkan, 232 53 ÅKARP (SE); GUIDETTI, Gloria, 40133 Bologna (IT); BABINI, Andrea, 41124 Modena (IT); SANDBERG, Rickard, 247 32 SÖDRA SANDBY (SE)
(74) Representative: Tetra Pak - Patent Attorneys SE

(56) References cited:
- EP-A1- 3 431 267

## Description

### TECHNICAL FIELD

The present invention relates, in general, to an induction sealing device.

### BACKGROUND

Many pourable food products, such as fruit juice, UHT milk, wine, tomato sauce, etc., are sold in packages made of sterilized packaging material. A typical example of this type of packages is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may comprise a layer of fibrous material, e.g. paper, or mineral-filled polypropylene material; and a number of layers of heat-seal plastic material, e.g. polyethylene films, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH) film, which is superimposed on a layer of heat-seal plastic material, and is in turn covered with another layer of heat-seal plastic material forming the inner face of the package eventually contacting the food product.

As is known, packages of this sort are produced on fully automatic packaging units, on which a continuous tube is formed from the web-fed packaging material; the web of packaging material is sterilized on the packaging unit, e.g. by applying a chemical sterilizing agent, such as a hydrogen peroxide solution, which, once sterilization is completed, is removed from the surfaces of the packaging material, e.g. evaporated by heating; and the web of packaging material so sterilized is maintained in a closed, sterile environment, and is folded and sealed longitudinally to form a vertical tube.

The tube is fed continuously in a first vertical direction, is filled with the sterilized or sterile-processed food product, and is gripped at equally spaced cross sections by two pairs of jaws. More specifically, the two pairs of jaws act cyclically and successively on the tube, and heat seal the packaging material of the tube to form a continuous strip of pillow packs connected to one another by respective transverse sealing bands, i.e. extending in a second direction perpendicular to said first direction.

The pillow packs are separated by cutting the relative transverse sealing bands, and are then fed to a final folding station where they are folded mechanically into the finished parallelepiped shape.

The tube portion gripped between each pair of jaws is heat sealed by heating means fitted to one of the jaws, known as the sealing jaw, and which locally melt the two layers of heat-seal plastic material gripped between the jaws.

More specifically, packaging material in which the layer of barrier material comprises a sheet of electrically conductive material, e.g. aluminium, is normally heat sealed by a so-called induction heat-sealing process when the tube is gripped by a jaw. In the induction heat-sealing process an induction sealing device induces an eddy current in the aluminum sheet to heat the aluminum sheet locally, thereby locally melting the heat-seal plastic material.

More specifically, in an induction sealing device, the heating means substantially comprises an inductor powered by a high-frequency current generator. The inductor herein substantially comprising one or more conductor elements made of electrically conductive material which interact with the tube material to induce an eddy current in it and heat it to the necessary sealing temperature.

Sealing devices comprising inductors of the above type are known, e.g. from the patent documents EP 1 270 182, EP 2 008 795 and EP 3 431 267.

More specifically, known sealing devices may comprise a supporting body connected integrally to the sealing jaw and defining two front seats for housing respective inductors; and an insert made of magnetic flux-concentrating material - in particular, a composite material comprising ferrite - and housed inside the supporting body, close to the conductor elements.

More specifically, the supporting body cooperates with the insert, and defines a peripheral portion of the sealing device surrounding the conductor elements and the insert of magnetic flux-concentrating material.

Although present induction sealing devices have many advantages, there is still room for improvement in terms of e.g. durability, cost-efficiency and sealing speed.

### SUMMARY

It is an objective of the invention to provide a durable induction sealing device. It is a further objective of the invention to provide a cost-effective induction sealing device. It is a further objective of the invention to facilitate a high sealing speed of the induction sealing device.

These and other objectives of the invention are at least partly met by the invention as defined in the independent claims. Preferred embodiments are set out in the dependent claims.

According to a first aspect of the invention, there is provided an induction sealing device for heat sealing packaging material for producing sealed packages of pourable food products, said sealing device comprising:
an inductor configured to induce a current in the packaging material, the inductor comprising conductor elements;
a polymer insert holding said conductor elements; and
a supporting body holding said polymer insert;
wherein the polymer insert comprises a polymer matrix into which boron nitride particles are dispersed.

The inventors have realized that efficient thermal management of induction sealing devices has several advantages.

Firstly, efficient thermal management enables durable and cost-effective induction sealing devices. In particular, the inductor of an inductor sealing device may be damaged by high temperatures and require maintenance and/or replacement. When an inductor breaks or reaches the end of its predicted lifetime the entire supporting body with its polymer insert and inductor may need to be replaced. As an entire production line, or parts of a production line, for packaging may rely on an induction sealing device, maintenance of said induction sealing device may be associated with great costs. Thus, effective cooling of the inductor, and/or parts in the vicinity of the inductor, may improve the durability of the induction sealing device and thereby reduce costs related to maintenance interruptions in the production process and costs related to spare parts.

Secondly, efficient thermal management enables a high sealing speed. During the sealing, the inductor may be turned on to induce an eddy current in the electrically conductive material of the packaging material such that it is heated to the sealing temperature, whereby the heat-seal plastic material at least partially melts. Subsequently, the inductor may be turned off, whereby the heat-seal plastic material may solidify, e.g. solidify while being gripped by the sealing jaws. Thus, effective cooling of the inductor, and/or parts in the vicinity of the inductor, may reduce the time required for solidifying the heat-seal plastic material. The quicker the heat-seal plastic material solidifies, the quicker the sealing jaws may release the packaging material. Consequently, efficient thermal management enables a high sealing speed.

The inventors have realized that efficient thermal management of an induction sealing device may be facilitated by dispersing boron nitride particles in the polymer insert. The polymer insert holds the conductor elements of the inductor while the supporting body holds the polymer insert. By dispersing boron nitride particles in polymer matrix of the polymer insert, the thermal conductivity of the polymer insert may increase. Thereby, the polymer insert may conduct heat away from the inductor, e.g. to the supporting body, such that the inductor is efficiently cooled. Further, the polymer insert may conduct heat away from the heat-seal plastic material, e.g. to the supporting body, such that the heat-seal plastic material is efficiently cooled.

The reason for the increase in thermal conductivity of the polymer insert may be the high thermal conductivity of boron nitride. Some forms of boron nitride may have a thermal conductivity up to 2000 Wm-1K-1. The thermal conductivity of a polymer insert comprising boron nitride may be lower. Still, a substantial improvement in the thermal conductivity of the polymer insert may be seen when boron nitride is added to the polymer matrix.

The inventors have realized that adding boron nitride to the polymer matrix of the polymer insert may reduce the risk of short circuiting the conductor elements. Thus, adding boron nitride to the polymer matrix of the polymer insert may facilitate a large freedom in the design of the induction sealing device. For example, a smaller spacing between conductor elements of the inductor may be facilitated by adding boron nitride to the polymer matrix of the polymer insert.

The inventors have realized that great care must be taken when choosing particles to be dispersed in the polymer matrix in order to reduce the defect rate in the production process. The polymer insert is often produced by casting the melted polymer in a mould. For example, casting the melted polymer matrix in a recess in the supporting body. If the melted polymer does not fill the mould entirely the produced polymer insert may be defective and need to be discarded. Further, during the casting there may be a segregation of fillers added to the polymer matrix which may result in some induction sealing devices being defective and needing to be discarded. It is a realization that the production defect rate may be low when boron nitride is used, which may save costs. The reason for the low production defect rate may be that the dispersion of boron nitride in the polymer matrix of the polymer insert does not reduce the melt flow rate of the melted polymer matrix substantially. Thereby the melted polymer matrix may fill the mould easily. Another reason for the low production defect rate may be that the dispersion of boron nitride in the polymer matrix of the polymer insert does not result in a substantial segregation of boron nitride. Thus, the boron nitride may be evenly distributed within the polymer insert. The boron nitride particles can be obtained from a process of exfoliation, therefore they might be exfoliated particles with 2D appearance.

The inductor comprises conductor elements which may form parts of an inductor loop. An inductor loop may also be called a wire loop. A conductor element may be an electrically conductive wire or an electrically conductive bar. The inductor may comprise e.g. one or two inductor loops. Thus, the inductor may be a single loop inductor or a double loop inductor. Of course, the inductor may comprise more than two loops.

The inductor may be configured to be connected to an alternating current generator, e.g. a high-frequency current generator. The inductor may be configured such that an alternating current in the inductor, e.g. in the loops of the inductor, induces an alternating magnetic field. The alternating magnetic field may, in turn, induce a current, e.g. an eddy current, in the packaging, e.g. in an aluminum foil of the packaging.

The polymer insert may be configured to hold the conductor elements in various ways. The polymer insert may hold the conductor elements on its own or in cooperation with other parts, e.g. in cooperation with the supporting body or other parts of the induction sealing device. For example, the conductor elements may be partially or fully encased in the polymer insert. Alternatively, the polymer insert may press the conductor elements against the supporting body or other parts of the induction sealing device.

The supporting body may be configured to hold the polymer insert in various ways. The supporting body may hold the polymer insert on its own or in cooperation with other parts. For example, the polymer insert may be partially or fully encased in the supporting body.

The boron nitride particles may be dispersed in the polymer matrix of the polymer insert as a filler. The polymer matrix of the polymer insert may additionally comprise other fillers. The boron nitride may be of e.g. a hexagonal form, a cubic form, or a wurtzite form.

The polymer insert may comprise magnetic particles dispersed into the polymer matrix of the polymer insert, whereby the polymer insert forms a flux-concentrating insert.

The magnetic particles may comprise ferromagnetic or ferrimagnetic particles. The magnetic particles may comprise at least one of the following materials: ferrite, NiZn ferrite, FeSiAl (sendust), FeSiB alloys (or its derivatives), and FeNi-alloys (or its derivatives).

The flux-concentrating insert may serve to concentrate the magnetic field generated by the inductor and thereby increase the efficiency of the induction sealing device. In order for the flux-concentrating insert to work efficiently it is often arranged in the vicinity of the conductor elements of the inductor, e.g. holding the conductor elements. Thus, a polymer insert that comprises both magnetic particles and boron nitride may serve the dual purpose of functioning as a flux-concentrating insert and a thermal conductor that cools the inductor.

Alternatively, the polymer insert may be configured to hold a flux-concentrating insert, wherein the flux-concentrating insert comprises a polymer matrix into which magnetic particles are dispersed. Thus, the polymer insert comprising the boron nitride particles may be different from the flux-concentrating insert. However, while holding the flux-concentrating insert the polymer insert comprising boron nitride may also conduct heat away from the flux-concentrating insert and/or away from the inductor. Thus, the polymer insert comprising the boron nitride particles may serve the dual purpose of functioning as a holder for the flux-concentrating insert and a thermal conductor that cools the inductor.

The polymer insert may be configured to have a dielectric strength above a threshold of 100 V/mm. Such a dielectric strength may ensure that the conductor elements do not short circuit, i.e. that electrical current do not travel along an unintended path between two conductor elements. A current path from one conductor element, through the polymer matrix of the polymer insert, to another conductor element could degrade the functionality of the inductor. Such a current path could result in only part of a loop of the inductor being active and generating a magnetic field. Thus, the heat-seal plastic material may not be heated over the intended area, resulting in a short or weak transverse sealing band. It should be understood that what is an acceptable threshold for the dielectric strength of the polymer insert may be different for different embodiments. In some embodiments the polymer insert may e.g. be configured to have a dielectric strength above a threshold of 400 V/mm.

The induction sealing device may be configured to have a concentration of boron nitride particles in the polymer insert below a threshold of 30%. Such a concentration of boron nitride particles may ensure that the melt flow rate of the polymer matrix of the polymer insert is not too low. Such a concentration of boron nitride particles may ensure that the polymer can be manufactured in an easy way, e.g. by injection moulding. The concentration may be measured by weight.

The polymer insert of the induction sealing device may further comprise electrically conducting particles dispersed into the polymer matrix of the polymer insert.

Electrically conducting particles often have a high thermal conductivity. Thus, adding electrically conducting particles to the polymer matrix of the polymer insert may ensure that the polymer insert conducts heat away from the inductor efficiently, e.g. to the supporting body, such that the inductor is efficiently cooled. The inventors have realized that although electrically conducting particles may increase the risk of short circuiting conductor elements of the inductor, that risk may be mitigated if the polymer insert also comprises boron nitride particles. Boron nitride may have a large dielectric strength. Consequently, it may be acceptable to add electrically conducting particles to the polymer matrix of the polymer insert when the boron nitride ensures that the overall dielectric strength of the polymer insert is still acceptable.

The electrically conducting particles may be graphene particles. Graphene may have a high thermal conductivity, around 1000-5000 Wm⁻¹K⁻¹ for single layer graphene. The thermal conductivity of a polymer insert comprising graphene may be lower. Still, a substantial improvement in the thermal conductivity of the polymer insert may be seen when graphene is added to the polymer matrix.

Further, graphene may exhibit good mechanical properties. For example, graphene may have a mechanical strength around 100-1100 GPa and a Young's modulus around 1 TPa. Thus, the mechanical properties of the polymer insert may not degrade due to the dispersion of graphene in the polymer matrix of the polymer insert. A durable polymer insert with good mechanical properties may be important as wear may be high when the packaging unit repeatedly grips and releases the packaging material. Thus, not degrading the mechanical properties of the polymer insert may be important to reduce maintenance associated with damaged polymer inserts. This may in turn lead to cost savings.

Further, the production defect rate may be low when graphene is used, which may save costs. The reason for the low production defect rate may be that the dispersion of graphene in the polymer matrix of the polymer insert does not reduce the melt flow rate of the melted polymer matrix substantially.

The induction sealing device may be configured to have a concentration of graphene particles in the polymer insert of the induction sealing device below 15%. Such a concentration of graphene particles may ensure that the dielectric strength of the polymer insert is sufficiently high to prevent the conductor elements from short circuiting. Such a concentration of graphene particles may facilitate a simple construction design of the induction sealing device. For example, if the concentration of graphene particles in the polymer insert is below 15% it may be possible to directly encase the inductor in the polymer insert. When the inductor is directly encased in the polymer insert there may be a path between two conductor elements via the polymer insert, wherein the path solely passes through the polymer insert. A concentration of graphene particles in the polymer insert below 15% may ensure that said path does not short circuit. However, it should be understood that if further means for electrical insulation are provided, the polymer insert may comprise more than 15% graphene. For example, if the conductor elements are provided with an electrically insulating coating, e.g. a polymer coating with little or none graphene before being encased in the polymer insert, the polymer insert may comprise more than 15% graphene. The concentration may be measured by weight.

It should be understood that the distance between the conductor elements that should be prevented from short circuiting may affect how much graphene the polymer insert can contain.

Thus, in some cases it may be advantageous to have a concentration of graphene particles in the polymer insert below a threshold of 10%. This may e.g. enable a short distance between the conductor elements. Thus, it may enable the induction sealing device to comprise a double loop inductor, wherein the conductor elements may be closely spaced, encased directly in the polymer insert. In some cases it may even be advantageous to have a concentration of graphene particles in the polymer insert below a threshold of 7.5%. In some cases the distance between the conductor elements may be sufficiently long that the polymer insert may comprise more than 15% graphene.

The polymer insert of the induction sealing device may be configured to have a thermal conductivity above a threshold of 0.2 Wm⁻¹K⁻¹. Such a thermal conductivity may ensure effective cooling of the inductor. It should be understood that what is considered to be sufficiently effective cooling of the inductor may vary depending on the application. Some types of heat-seal plastic material may require higher temperatures and/or higher currents in the inductor in order to melt, in which case a higher thermal conductivity threshold for the polymer insert may be required. A high repetition frequency for the heat sealing may also require more effective cooling, in which case a higher thermal conductivity threshold for the polymer insert may be required. Thus, in some embodiments the polymer insert of the induction sealing device may be configured to have a thermal conductivity above a threshold of 0.3 Wm⁻¹K⁻¹. In other embodiments the polymer insert of the induction sealing device may be configured to have a thermal conductivity above a threshold of 0.4 Wm⁻¹K⁻¹. In other embodiments the polymer insert of the induction sealing device may be configured to have a thermal conductivity above a threshold of 0.5 Wm⁻¹K⁻¹.

The polymer matrix of the polymer insert of the induction sealing device may be polyphenylene sulfide (PPS). PPS may be particularly compatible with fillers comprising graphene and/or boron nitride. The production defect rate may be low for polymer inserts with a polymer matrix of PPS. PPS may have a higher melt flow rate than alternative polymers. Thus, more graphene and/or boron nitride may be dispersed in PPS before the production defect rate becomes severe.

Alternatively, other polymers may be used as a polymer matrix of the polymer insert. For example, other thermoplastic polymers may be used as a polymer matrix of the polymer insert. For example, polyether ether ketone (PEEK) may be used as a polymer matrix of the polymer insert.

The polymer insert of the induction sealing device may comprise reinforcing fibers. This may be advantageous as it may improve the mechanical properties of the polymer insert and thereby improve the durability. The reinforcing fibers may be e.g. glass fibers.

The induction sealing device may comprise at least one groove separating two conductor elements. The groove may be a groove in the polymer insert. The groove may form a cutting groove. The groove may be arranged between two loops of an inductor. Thus, each loop may form a seal in the packaging material and the groove may allow a cutter, e.g. a blade, to cut the packaging material between the loops. The groove may additionally or alternatively separate two conductor elements and thereby reduce the risk of a short circuit between the conductor elements.

The supporting body of the induction sealing device may be made of metal. This may further improve the cooling of the inductor. Heat may be conducted from the conductor elements of the inductor, via the polymer insert holding the conductor elements, to the supporting body holding the polymer insert. Metal may herein be regarded as a good thermal conductor which may remove the heat further.

The polymer insert of the induction sealing device may be configured such that the polymer matrix with dispersed particles has a melt flow rate above a threshold of 40, when the polymer matrix is in a melted form. A melt flow rate above a threshold of 40 may enable the polymer insert being produced by injection moulding. This may be a cost-effective production method. The required threshold may vary between applications. For example, if the polymer insert comprise small features, a higher threshold for the melt flow rate may be advantageous to ensure that the polymer matrix in the melted form fills the mould completely. Thus, as an alternative to a threshold of 40 the threshold may be e.g. 50. The melt flow rate may be a melt flow rate as measured according to a standard, e.g. ISO 1133. The melt flow rate may be measured at a temperature of 316 °C with the melted polymer matrix being subjected to a weight of 5 kg.

### BRIEF DESCRIPTION OF THE DRAWINGS

The above, as well as additional objects, features and advantages of the present inventive concept, will be better understood through the following illustrative and non-limiting detailed description, with reference to the appended drawings. In the drawings like reference numerals will be used for like elements unless stated otherwise.
Fig. 1a shows a cross-section of an induction sealing device.
Fig. 1b shows a schematic electric diagram of an inductor of an induction sealing device.
Fig. 2a-b show cross-sections of induction sealing devices.
Fig. 3a-d show cross-sections of induction sealing devices.
Fig. 4 shows measured thermal conductivities.
Fig. 5 shows measured breakdown voltages.
Fig. 6 shows measured flow lengths.

### DETAILED DESCRIPTION

In the following a number of induction sealing devices 15 for heat sealing packaging material for producing sealed packages of pourable food products will be described. The induction sealing devices 15 may be configured to press against the packaging material in a direction A. During the sealing of the packaging material, the packaging material may be pressed on opposite sides by the induction sealing devices 15 and an anvil.

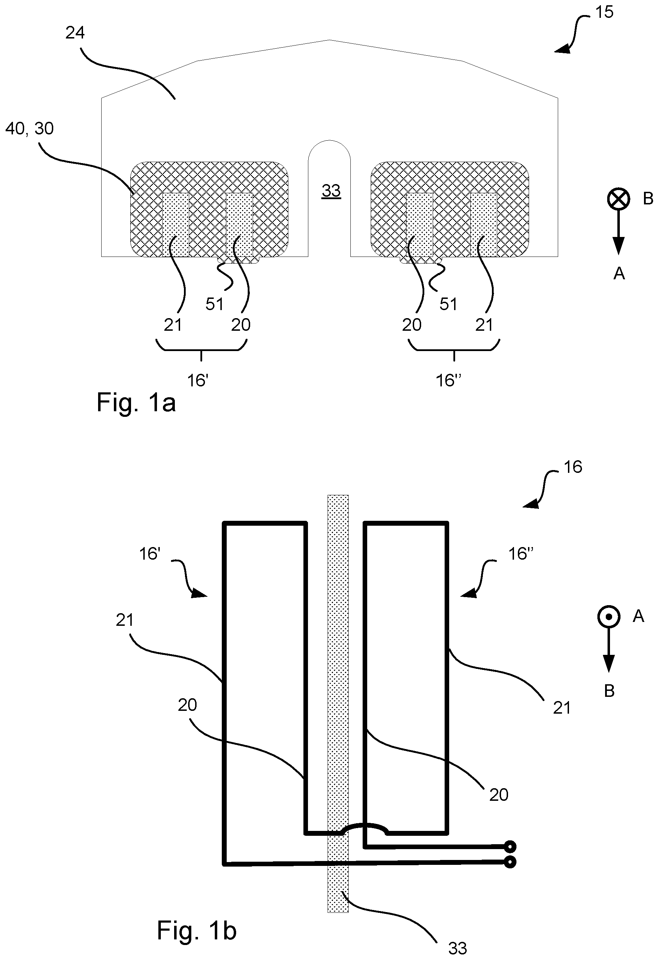

Figure 1a illustrates an induction sealing device 15 in cross-sectional view, wherein direction B is normal to the cross-sectional plane. In the induction sealing device 15, the polymer insert 40 holds the conductor elements 20, 21 of an inductor 16 while the supporting body 24 holds the polymer insert 40. The polymer insert 40 comprises a polymer matrix. In Figure 1a the polymer insert 40 comprise magnetic particles dispersed into the polymer matrix of the polymer insert 40, whereby the polymer insert 40 forms a flux-concentrating insert 30.

Figure 1b illustrates a schematic electric diagram of the inductor 16 in Figure 1a, as viewed in a direction A orthogonal to direction B. The illustrated inductor 16 comprises conductor elements 20, 21 in the form of electrically conductive bars. Two conductor elements 20, 21 may form parts of an inductor loop. Figure 1b illustrates a double loop inductor 16 comprising a first inductor loop 16' and a second inductor loop 16". An induction sealing device 15 may of course comprise any number of inductor loops. The inductor 16 may be connected to an alternating current generator, e.g. a high-frequency current generator (not shown in the Figures).

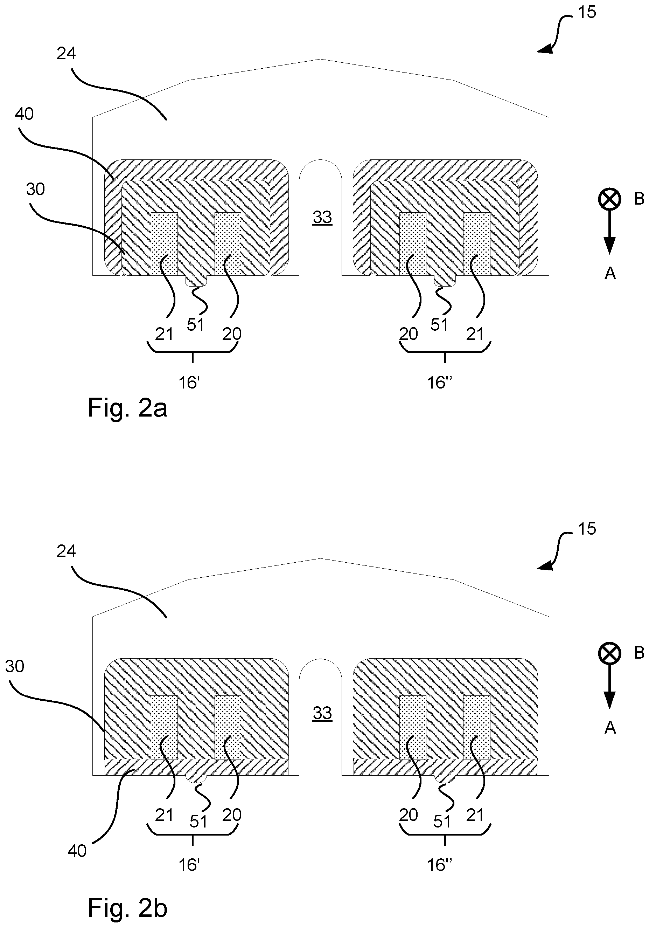

In Figure 1a the polymer insert 40 is a flux-concentrating insert 30. As an alternative, the polymer insert 40 may hold a flux-concentrating insert 30, as illustrated in Figure 2a and 2b. Thus, as illustrated in Figure 2a and 2b, one polymer matrix comprising magnetic particles may form a flux-concentrating insert 30 while a separate polymer insert 40, comprising a polymer matrix and e.g. graphene and/or boron nitride, conducts heat away from the inductor 16. Alternatively, the polymer matrix may, as illustrated in Figure 1a, comprise both magnetic particles and heat conducting particles such as e.g. graphene and/or boron nitride.

In Figure 1a the polymer insert 40 holds the conductor elements 20, 21 by partially encasing the conductor elements 20, 21, herein encasing the conductor elements 20, 21 on three sides. As an alternative the polymer insert 40 may hold the conductor elements 20, 21 by holding another part of the induction sealing device 15 which in turn holds the conductor elements 20, 21. Figure 2a illustrates a polymer insert 40 holding another part of the induction sealing device 15, in this case a flux-concentrating insert 30, which in turn holds the conductor elements 20, 21. As a further alternative the polymer insert 40 may hold the conductor elements 20, 21 by pressing the conductor elements 20, 21 against the supporting body 24 or another part of the induction sealing device 15. Figure 2b illustrates a polymer insert 40 holding the conductor elements 20, 21 by pressing the conductor elements 20, 21 against another part of the induction sealing device 15, in this case a flux-concentrating insert 30.

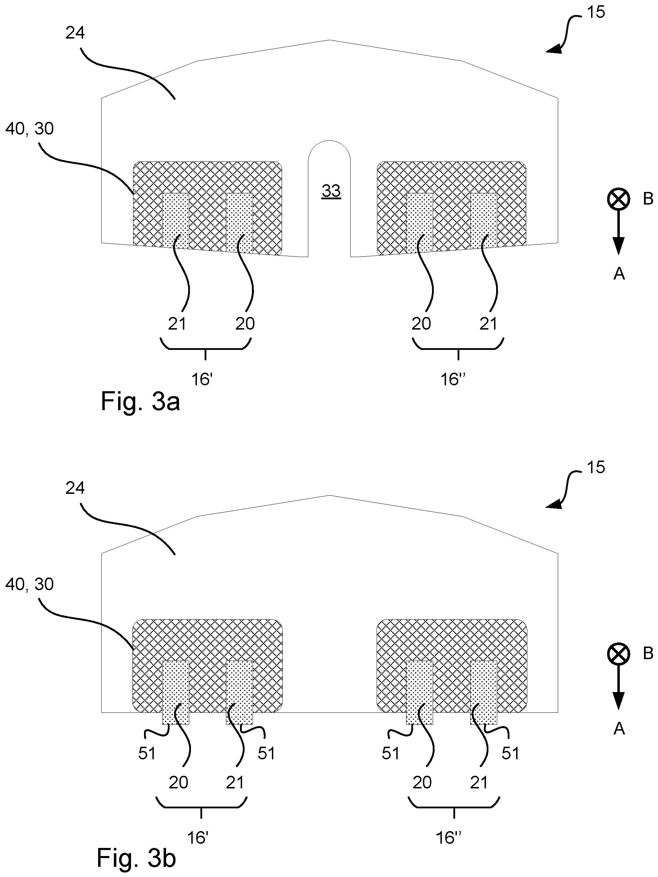

There are many conceivable design options for an induction sealing device 15. A few design options, in addition to the ones shown in Figure 1a and Figure 2a-b, are shown in Figure 3a-d. The induction sealing device 15 may be configured to bring the inductor 16 and/or the flux-concentrating insert 30 in close proximity to the packaging material. For example, the induction sealing device 15 may be configured to be pressed against the packaging material in direction A illustrated in the Figures.

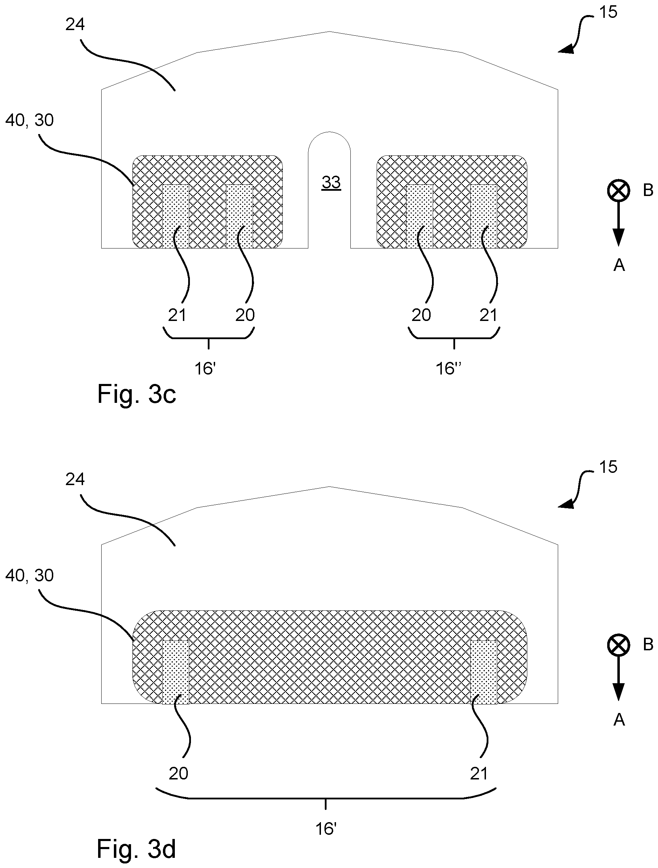

A surface of the induction sealing device 15 configured to press against the packaging material may be fitted with one or more ridges 51 configured to supply a localized pressure to the packaging material. A ridge 51 may be formed by a flux-concentrating insert 30, e.g. as in Figure 1a, by the polymer insert 40, e.g. as in Figure 2b, or by a conductor element 20, 21, e.g. as in Figure 3b. A ridge 51 may be arranged at a conductor element 20, 21, e.g. as in Figure 1a or Figure 3b, or in between two conductor elements 20, 21, e.g. as in Figure 2a. Alternatively, the induction sealing device 15 may lack ridges 51, as shown in Figure 3a, 3c and 3d.

A surface of the induction sealing device 15 configured to press against the packaging material may be inclined, as illustrated in Figure 3a. Thus, the induction sealing device 15 may be configured to press the pourable food product away from a central region of the induction sealing device 15. Thereby, the risk of the pourable food product degrading the seal may be reduced.

The inductor 16 of the induction sealing device 15 may comprise a first induction loop 16' and a second induction loop 16", as illustrated in e.g. Figure 1a and Figure 3c. Alternatively, the inductor 16 of the induction sealing device 15 may comprise solely a first induction loop 16', as illustrated in Figure 3d.

The induction sealing device 15 may comprise a groove 33. The groove 33 may form a cutting groove. The groove may be arranged between two inductor loops 16' and 16", e.g. as illustrated in Figure 1a. Thus, each inductor loop may form a seal in the packaging material and the groove 33 may allow a cutter, e.g. a blade, to cut the packaging material between the loops. The groove 33 may additionally or alternatively separate two conductor elements 20, 21 and thereby reduce the risk of a short circuit between the conductor elements 20, 21.

The supporting body 24, e.g. in any of the devices illustrated in Figure 1-3, may be made of metal. Alternatively, the supporting body 24 may be made of a ceramic. Alternatively, the supporting body 24 may be made of a polymer with a heat conducting filler, e.g. graphene.

The induction sealing device 15 may comprise a cooling system, e.g. a cooling system circulating cooling liquid. The cooling system may be connected to the supporting body of the induction sealing device 15.

The polymer matrix of the polymer insert 40, e.g. in any of the devices illustrated in Figure 1-3, may be polyphenylene sulfide (PPS). The polymer matrix of the flux-concentrating insert 30, e.g. in any of the devices illustrated in Figure 1-3, may be PPS. Other polymer matrices may alternatively be used for either of the polymer insert 40 or the flux-concentrating insert 30. For example, other thermoplastic polymers may be used as a polymer matrix. For example, polyether ether ketone (PEEK) may be used as a polymer matrix.

Thermally conductive particles may be dispersed in the polymer matrix of the polymer insert 40, e.g. in the polymer insert 40 of any of the devices illustrated in Figure 1-3. The thermally conductive particles may be graphene and/or boron nitride. For example, the polymer insert 40 may comprise a PPS polymer matrix into which graphene and/or boron nitride is dispersed.

The graphene particles may have a thickness of one monolayer. The graphene particles may have a thickness larger than one monolayer. The thickness of the graphene particles may be represented by a thickness distribution, e.g. 10-100% of the particles having monolayer thickness. The lateral size of the graphene particles may be e.g. 0.1-10 µm or 0.0001-2 mm. The graphene particles may be produced by e.g. liquid phase exfoliation of graphite, oxidation of graphite with subsequent exfoliation and/or reduction, or chemical vapor deposition.

The boron nitride particles may be of the hexagonal, cubic or wurtzite form. The boron nitride particles may have a platelet shape. Other shapes of the boron nitride particles may alternatively be used, e.g. granules, granules of platelets, agglomerates or agglomerates of platelets. The size of the boron nitride particles may be e.g. 0.1-10 µm or 0.0001-2 mm.

As fillers are dispersed in the polymer matrix of the polymer insert 40 properties of the polymer matrix may change. Examples of properties that may change are: the thermal conductivity, the dielectric strength, and the melt flow index. In the following the above properties of PPS will be discussed as a function of filler concentration for the two fillers graphene and boron nitride. Filler concentrations of 0%, 5%, 7.5%, and 10% were measured. The concentrations were measured by weight.

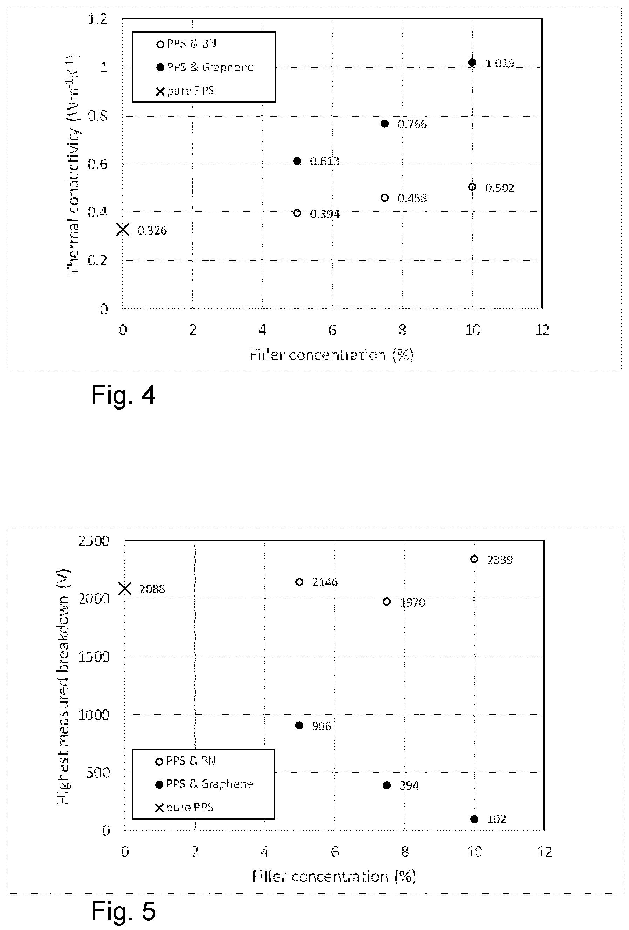

Figure 4 shows measured thermal conductivities for PPS as a function of filler concentration for graphene and boron nitride. As can be seen in the Figure, the thermal conductivity increases with filler concentration for both graphene and boron nitride. Pure PPS displayed a thermal conductivity of 0.326 Wm⁻¹K⁻¹. PPS with 10% graphene displayed a thermal conductivity of 1.019 Wm⁻¹K⁻¹, roughly a 210% increase. PPS with 10% boron nitride displayed a thermal conductivity of 0.502 Wm^{- 1}K⁻¹, roughly a 50% increase. Further increases in thermal conductivity may be expected at higher filler concentrations. Further measured thermal conductivities may be found in Table 1.

**Table 1**

| **Polymer insert** | **Thermal conductivity (W/(mK)** | | **Polymer insert** | **Thermal conductivity (W/(mK)** |
|---|---|---|---|---|
| Pure PPS | 0.362 | | | |
| | | | | |
| PPS + 5% BN | 0.394 | | polymer + ferrite | 1.143 |
| PPS + 7.5% BN | 0.458 | | polymer + ferrite + 20% BN | 2.079 |
| PPS + 10% BN | 0.502 | | polymer + ferrite + 7.5% graphene | 2.114 |
| PPS + 20% BN | 0.651 | | polymer + ferrite + 7.5% graphene + 7.5% BN | 3.049 |
| | | | | |
| PPS + 5% graphene | 0.613 | | | |
| PPS + 7.5% graphene | 0.766 | | | |
| PPS + 10% graphene | 1.019 | | | |

Figure 5 shows the highest measured breakdown voltages for PPS as a function of filler concentration for graphene and boron nitride measured across a 0.5 mm thick sample. The dielectric strength may be the breakdown voltage divided by the sample thickness. It should be noted that some samples displayed lower breakdown voltages than the ones presented. However, achieving the highest possible breakdown voltage at a given filler concentration may be a matter of optimization of the manufacturing process. Consequently, it is the highest measured breakdown voltages that are of interest. As can be seen in the Figure, the breakdown voltage may increase with increasing boron nitride concentration. Further, the breakdown voltage may decrease with increasing graphene concentration. Pure PPS displayed a breakdown voltage of 2088 V, which may correspond to a dielectric strength of 4176 V/mm. PPS with 10% graphene displayed a highest breakdown voltage of 102 V, which may correspond to a dielectric strength of 204 V/mm. PPS with 10% boron nitride displayed a highest breakdown voltage of 2339 V, which may correspond to a dielectric strength of 4678 V/mm. However, it should be noted that the dielectric strength of pure PPS may, according to the material specification, be in the range of 11-24 kV/mm. Thus, the measurements may possibly underestimate the actual dielectric strength by a factor between 3 and 6.

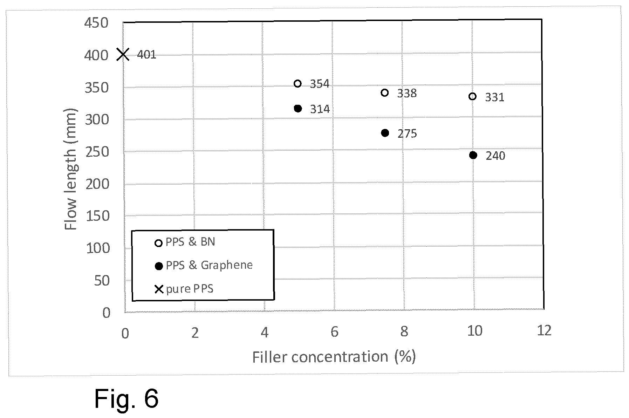

Figure 6 shows measured flow lengths from a snake flow test for PPS as a function of filler concentration for graphene and boron nitride. The flow length was measured by injection moulding the melted polymer matrix with dispersed fillers into a mould with a snake-like configuration. The injection moulding was performed with a melt temperature of approximately 335°C, an injection pressure of 150 MPa, and an injection speed of 40 ccm/s. As can be seen in the Figure, the flow length was observed to decrease with filler concentration for both graphene and boron nitride. All measured flow lengths correspond to melt flow rates above 40.

Based on the studies presented in Figure 4-6 it is estimated that the polymer insert 40 may have one of the following configurations:
The polymer insert 40 of at least some of the devices of Figures 1-3, e.g. the device of Figure 2a or 2b, may be made of PPS into which 15% graphene has been dispersed.

The polymer insert 40 of at least some of the devices of Figures 1-3, e.g. the device of Figure 2a or 2b, may be made of PPS into which 30% boron nitride has been dispersed.

The polymer insert 40 of at least some of the devices of Figures 1-3, e.g. the device of Figure 1a or 3a, may be made of PPS into which 15% graphene and 60% ferrite has been dispersed, such that the polymer insert 40 forms a flux-concentrating insert 30.

The polymer insert 40 of at least some of the devices of Figures 1-3, e.g. the device of Figure 1a or 3a, may be made of PPS into which 20% boron nitride and 60% ferrite has been dispersed, such that the polymer insert 40 forms a flux-concentrating insert 30.

The polymer insert 40 of at least some of the devices of Figures 1-3, e.g. the device of Figure 1a or 3a, may be made of PPS into which 10% graphene, 10% boron nitride, and 60% ferrite has been dispersed, such that the polymer insert 40 forms a flux-concentrating insert 30.

The polymer insert 40 of at least some of the devices of Figures 1-3, e.g. the device of Figure 1a or 3a, may be made of PPS into which 20% graphene, 20% boron nitride, and 50% ferrite has been dispersed, such that the polymer insert 40 forms a flux-concentrating insert 30.

The polymer insert 40 of at least some of the devices of Figures 1-3, e.g. the device of Figure 1a or 3a, may be made of PPS into which 5% graphene, 5% boron nitride, and 80% ferrite has been dispersed, such that the polymer insert 40 forms a flux-concentrating insert 30.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. An induction sealing device (15) for heat sealing packaging material for producing sealed packages of pourable food products, said sealing device (15) comprising:
an inductor (16) configured to induce a current in the packaging material, the inductor (16) comprising conductor elements (20, 21);
a polymer insert (40) holding said conductor elements (20, 21); and
a supporting body (24) holding said polymer insert (40);
wherein the polymer insert (40) comprises a polymer matrix into which boron nitride particles are dispersed.

2. The induction sealing device (15) of claim 1, wherein the polymer insert (40) comprises magnetic particles dispersed into the polymer matrix of the polymer insert (40), whereby the polymer insert (40) forms a flux-concentrating insert (30).

3. The induction sealing device (15) of claim 1, wherein the polymer insert (40) is configured to hold a flux-concentrating insert (30), wherein the flux-concentrating insert (30) comprises a polymer matrix into which magnetic particles are dispersed.

4. The induction sealing device (15) of any one of the preceding claims, wherein a concentration of boron nitride particles in the polymer insert (40) is below a threshold of 30%.

5. The induction sealing device (15) of any one of the preceding claims, wherein the polymer insert (40) further comprises electrically conducting particles dispersed into the polymer matrix of the polymer insert (40).

6. The induction sealing device (15) of claim 5, wherein the electrically conducting particles are graphene particles.

7. The induction sealing device (15) of claim 6, wherein a concentration of graphene particles in the polymer insert (40) is below 15%.

8. The induction sealing device (15) of any one of the preceding claims, wherein the polymer insert (40) is configured to have a thermal conductivity above a threshold of 0.2 W/(mK).

9. The induction sealing device (15) of any one of the preceding claims, wherein the polymer matrix of the polymer insert (40) is polyphenylene sulfide (PPS).

10. The induction sealing device (15) of any one of the preceding claims, wherein the polymer insert (40) comprises reinforcing fibers.

11. The induction sealing device (15) of any one of the preceding claims, further comprising at least one groove (33) separating two conductor elements (20, 21).

12. The induction sealing device (15) of any one of the preceding claims, wherein the supporting body (24) is made of metal.

13. The induction sealing device (15) of any one of the preceding claims, wherein the polymer insert (40) is configured such that the polymer matrix with dispersed particles has a melt flow rate above a threshold of 40, when the polymer matrix is in a melted form.

## Patentansprüche

1. Induktionssiegelvorrichtung (15) zum Heißsiegeln von Verpackungsmaterial zur Herstellung von versiegelten Verpackungen von schüttbaren Lebensmittelprodukten, wobei die Siegelvorrichtung (15) umfasst:
einen Induktor (16) gestaltet zum Induzieren eines Stroms in dem Verpackungsmaterial, wobei der Induktor (16) Leiterelemente (20, 21) umfasst;
einen Polymereinsatz (40), der die Leiterelemente (20, 21) hält; und
einen Trägerkörper (24), der den Polymereinsatz (40) hält;
wobei der Polymereinsatz (40) eine Polymermatrix umfasst, in der Bornitridpartikel dispergiert sind.

2. Induktionssiegelvorrichtung (15) nach Anspruch 1, wobei der Polymereinsatz (40) magnetische Partikel umfasst, die in der Polymermatrix des Polymereinsatzes (40) dispergiert sind, wodurch der Polymereinsatz (40) einen flusskonzentrierenden Einsatz (30) bildet.

3. Induktionssiegelvorrichtung (15) nach Anspruch 1, wobei der Polymereinsatz (40) dafür gestaltet ist, einen flusskonzentrierenden Einsatz (30) zu halten, wobei der flusskonzentrierende Einsatz (30) eine Polymermatrix umfasst, in der magnetische Partikel dispergiert sind.

4. Induktionssiegelvorrichtung (15) nach einem der vorstehenden Ansprüche, wobei eine Konzentration von Bornitridpartikeln in dem Polymereinsatz (40) unter einem Schwellenwert von 30 % liegt.

5. Induktionssiegelvorrichtung (15) nach einem der vorstehenden Ansprüche, wobei der Polymereinsatz (40) ferner elektrisch leitende Partikel umfasst, die in der Polymermatrix des Polymereinsatzes (40) dispergiert sind.

6. Induktionssiegelvorrichtung (15) nach Anspruch 5, wobei die elektrisch leitenden Partikel Graphenpartikel sind.

7. Induktionssiegelvorrichtung (15) nach Anspruch 6, wobei eine Konzentration von Graphenpartikeln in dem Polymereinsatz (40) unter 15 % liegt.

8. Induktionssiegelvorrichtung (15) nach einem der vorstehenden Ansprüche, wobei der Polymereinsatz (40) dafür gestaltet ist, eine Wärmeleitfähigkeit über einem Schwellenwert von 0,2 W/(mK) aufzuweisen.

9. Induktionssiegelvorrichtung (15) nach einem der vorstehenden Ansprüche, wobei die Polymermatrix des Polymereinsatzes (40) Polyphenylensulfid (PPS) ist.

10. Induktionssiegelvorrichtung (15) nach einem der vorstehenden Ansprüche, wobei der Polymereinsatz (40) Verstärkungsfasern umfasst.

11. Induktionssiegelvorrichtung (15) nach einem der vorstehenden Ansprüche, ferner umfassend wenigstens eine Nut (33), die zwei Leiterelemente (20, 21) trennt.

12. Induktionssiegelvorrichtung (15) nach einem der vorstehenden Ansprüche, wobei der Trägerkörper (24) aus Metall gebildet ist.

13. Induktionssiegelvorrichtung (15) nach einem der vorstehenden Ansprüche, wobei der Polymereinsatz (40) so gestaltet ist, dass die Polymermatrix mit dispergierten Partikeln eine Schmelzflussrate über einem Schwellenwert von 40 aufweist, wenn die Polymermatrix in einer geschmolzenen Form vorliegt.

## Revendications

1. Dispositif de scellement par induction (15) pour thermosceller un matériau d'emballage pour la production d'emballages scellés de produits alimentaires versables, ledit dispositif de scellement (15) comprenant :
un inducteur (16) configuré pour induire un courant dans le matériau d'emballage, l'inducteur (16) comprenant des éléments conducteurs (20, 21) ;
un insert de polymère (40) maintenant lesdits éléments conducteurs (20, 21) ; et
un corps de support (24) maintenant ledit insert de polymère (40) ;
dans lequel l'insert de polymère (40) comprend une matrice de polymère dans laquelle sont dispersées des particules de nitrure de bore.

2. Dispositif de scellement par induction (15) selon la revendication 1, dans lequel l'insert de polymère (40) comprend des particules magnétiques dispersées dans la matrice de polymère de l'insert de polymère (40), moyennant quoi l'insert de polymère (40) forme un insert de concentration de flux (30).

3. Dispositif de scellement par induction (15) selon la revendication 1, dans lequel l'insert de polymère (40) est configuré pour maintenir un insert de concentration de flux (30), dans lequel l'insert de concentration de flux (30) comprend une matrice de polymère dans laquelle sont dispersées des particules magnétiques.

4. Dispositif de scellement par induction (15) selon l'une quelconque des revendications précédentes, dans lequel une concentration de particules de nitrure de bore dans l'insert de polymère (40) est inférieure à un seuil de 30 %.

5. Dispositif de scellement par induction (15) selon l'une quelconque des revendications précédentes, dans lequel l'insert de polymère (40) comprend en outre des particules électriquement conductrices dispersées dans la matrice de polymère de l'insert de polymère (40).

6. Dispositif de scellement par induction (15) selon la revendication 5, dans lequel les particules électriquement conductrices sont des particules de graphène.

7. Dispositif de scellement par induction (15) selon la revendication 6, dans lequel une concentration de particules de graphène dans l'insert de polymère (40) est inférieure à 15 %.

8. Dispositif de scellement par induction (15) selon l'une quelconque des revendications précédentes, dans lequel l'insert de polymère (40) est configuré pour avoir une conductivité thermique supérieure à un seuil de 0,2 W/ (mK).

9. Dispositif de scellement par induction (15) selon l'une quelconque des revendications précédentes, dans lequel la matrice de polymère de l'insert de polymère (40) est un poly(sulfure de phénylène) (PPS).

10. Dispositif de scellement par induction (15) selon l'une quelconque des revendications précédentes, dans lequel l'insert de polymère (40) comprend des fibres de renforcement.

11. Dispositif de scellement par induction (15) selon l'une quelconque des revendications précédentes, comprenant en outre au moins une rainure (33) séparant deux éléments conducteurs (20, 21).

12. Dispositif de scellement par induction (15) selon l'une quelconque des revendications précédentes, dans lequel le corps de support (24) est composé de métal.

13. Dispositif de scellement par induction (15) selon l'une quelconque des revendications précédentes, dans lequel l'insert de polymère (40) est configuré de telle sorte que la matrice de polymère comportant des particules dispersées a un débit de fusion supérieur à un seuil de 40, lorsque la matrice de polymère est sous une forme fondue.
